# FASCICULE DE BREVET EUROPEEN

(11) **EP 3 923 401 B1**
(45) Date de publication et mention de la délivrance du brevet: **02.08.2023**
(21) Numéro de dépôt: 21177580.4
(22) Date de dépôt: 03.06.2021
(51) Int. Cl.: H01M 10/613, H01M 10/617, H01M 10/643, H01M 10/654, H01M 10/6563, H01M 10/6567, H01M 50/213

(54) **BATTERIE ÉLECTRIQUE COMPORTANT UN DISPOSITIF D'HOMOGÉNÉISATION DE SA TEMPÉRATURE INTERNE**
ELEKTRISCHE BATTERIE EINSCHLIESSLICH EINER VORRICHTUNG ZUR HOMOGENISIERUNG DER INNENTEMPERATUR
ELECTRIC BATTERY INCLUDING A DEVICE FOR HOMOGENIZING ITS INTERNAL TEMPERATURE

(30) Priorité: 08.06.2020 FR 2005965
(43) Date de publication de la demande: 15.12.2021
(73) Titulaire: Commissariat à l'Energie Atomique et aux Energies Alternatives, 75015 Paris (FR)
(72) Inventeur: PANARIELLO, Remy, 38054 GRENOBLE CEDEX 09 (FR); BEY, Mehdi, 38054 GRENOBLE CEDEX 09 (FR); METRAL, Frédéric, 38054 GRENOBLE CEDEX 09 (FR)
(74) Mandataire: Cabinet Beaumont

(56) Documents cités:
- EP-A1- 1 357 629
- EP-A1- 3 166 175
- EP-A1- 3 557 689
- WO-A1-2011/067697
- DE-A1-102008 040 622
- US-A1- 2005 202 310

## Description

### Domaine technique

La présente description concerne de façon générale le domaine des batteries électriques, et vise plus particulièrement une batterie électrique comportant un dispositif de brassage fluidique permettant d'homogénéiser sa température interne.

### Technique antérieure

Une batterie électrique comprend classiquement une pluralité de cellules élémentaires de stockage d'énergie électrique rechargeables connectées en série et/ou en parallèle entre une borne positive et une borne négative de fourniture de tension de la batterie. Les cellules sont généralement disposées dans un boîtier de protection laissant accessible la borne positive et la borne négative de la batterie.

Les cellules élémentaires sont classiquement des piles ou accumulateurs électrochimiques. Les cellules ont généralement tendance à s'échauffer naturellement lors des phases de recharge et de décharge de la batterie. Les cellules doivent toutefois, sous peine de se dégrader, être maintenues dans des plages de température spécifiques dépendant notamment de leur mode de fonctionnement (recharge, décharge, repos, etc.) et du type de cellule considéré.

Pour prévenir les risques de sortir des plages de température préconisées, diverses solutions de gestion thermique ont été proposées. Parmi ces solutions, on trouve notamment des solutions basées sur la convection naturelle de l'air entourant les cellules, permettant une homogénéisation thermique au cœur de la batterie et la création d'un échange thermique avec les parois du boîtier de la batterie. On trouve aussi des solutions basées sur la circulation d'un flux d'air forcé à l'intérieur du boîtier, ou encore des solutions basées sur la prévision, dans le boîtier, d'un fluide diélectrique au contact direct des cellules, avec ou sans circulation forcée vers un échangeur thermique extérieur.

Il serait souhaitable d'améliorer au moins en partie certains aspects des solutions connues de gestion thermique dans une batterie électrique. Les documents EP3557689, DE102008040622, US2005/202310, WO2011/067697, EP1357629 et EP3166175 décrivent des exemples de solutions de gestion thermique dans une batterie électrique.

### Résumé de l'invention

Pour cela, un mode de réalisation prévoit un module de batterie électrique comportant une pluralité de cellules élémentaires de stockage, et au moins une cellule de brassage fluidique ayant la même forme générale et sensiblement les mêmes dimensions que les cellules élémentaires de stockage.

Selon un mode de réalisation, la cellule de brassage présente des première et deuxième bornes de connexion électrique ayant sensiblement la même forme et les mêmes dimensions que, respectivement, des première et deuxième bornes de connexion électrique des cellules élémentaires de stockage.

Selon un mode de réalisation, chaque cellule de brassage a ses première et deuxième bornes de connexion électrique connectées respectivement aux première et deuxième bornes de connexion électrique d'une cellule élémentaire de stockage.

Selon un mode de réalisation, les cellules élémentaires de stockage sont réparties en plusieurs étages de plusieurs cellules élémentaires de stockage chacun, les cellules élémentaires de stockage d'un même étage étant connectées en parallèle et les étages étant connectés en série.

Selon un mode de réalisation, chaque cellule de brassage comprend un boîtier ayant la même forme générale et sensiblement les mêmes dimensions que les cellules élémentaires de stockage, et, à l'intérieur du boîtier, un dispositif de brassage fluidique relié électriquement aux première et deuxième bornes de connexion électrique de la cellule de brassage.

Selon un mode de réalisation, le boîtier présente des ouvertures traversantes de part et d'autre du dispositif de brassage.

Selon un mode de réalisation, le dispositif de brassage fluidique est relié électriquement aux première et deuxième bornes de connexion électrique de la cellule de brassage par l'intermédiaire d'un circuit de contrôle.

Selon un mode de réalisation, le circuit de contrôle comprend un interrupteur thermique adapté à activer le dispositif de brassage lorsque la température dépasse un premier seuil de température prédéfini, et à désactiver le dispositif de brassage lorsque la température repasse sous un deuxième seuil de température prédéfini, inférieur ou égal au premier seuil de température.

Selon un mode de réalisation, le circuit de contrôle est configuré pour désactiver le dispositif de brassage lorsque la tension entre les première et deuxième bornes de connexion électrique de la cellule de brassage passe sous un seuil de tension prédéfini.

Selon un mode de réalisation, le circuit de contrôle est adapté à détecter une mise en fonctionnement d'un dispositif extérieur alimenté par le module, et à activer le dispositif de brassage uniquement lorsque le dispositif extérieur est en fonctionnement.

Selon un mode de réalisation, le dispositif de brassage est un dispositif de brassage d'un gaz.

Selon un mode de réalisation, le dispositif de brassage est un dispositif de brassage d'un liquide.

Selon un mode de réalisation, la cellule de brassage est auto-commandée, c'est-à-dire qu'aucune liaison de communication n'est prévue entre la cellule de brassage et un dispositif extérieur.

Selon un mode de réalisation, les cellules élémentaires de stockage et ladite au moins une cellule de brassage sont cylindriques.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en perspective schématique et partielle d'un exemple d'un module de batterie électrique ;
la figure 2 est une vue en perspective schématique illustrant un exemple d'une cellule de brassage fluidique d'une batterie électrique selon un mode de réalisation ;
la figure 3 est une vue en perspective schématique et partielle d'un exemple d'un module de batterie intégrant une cellule de brassage fluidique du type décrit en relation avec la figure 2 ; et
la figure 4 représente de façon schématique, sous forme de blocs, le fonctionnement d'une cellule de brassage fluidique du type décrit en relation avec la figure 2.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la réalisation des cellules élémentaires des batteries décrites n'a pas été détaillées, les modes de réalisation décrits étant compatibles avec toutes ou la plupart des cellules élémentaires de batterie connues.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

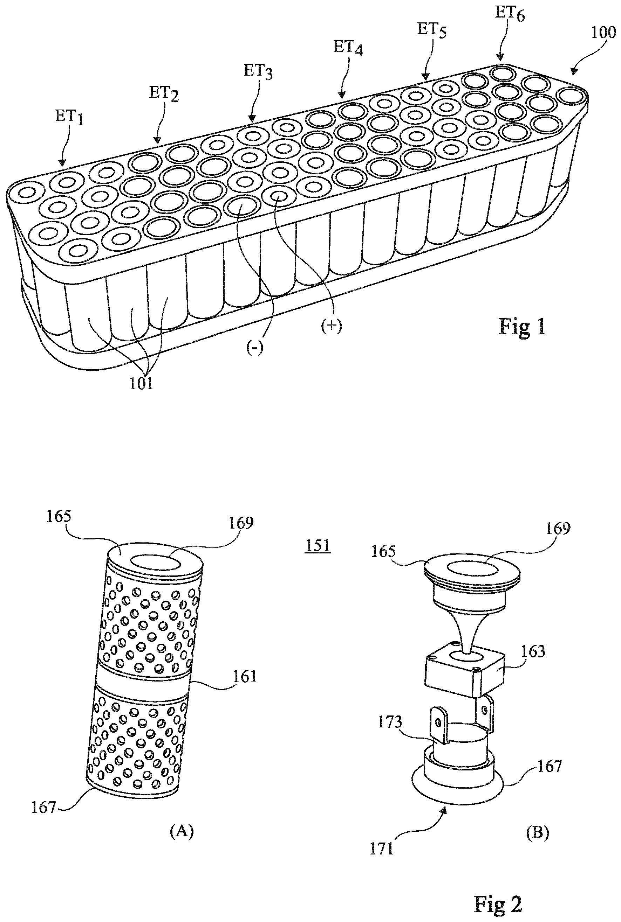

La figure 1 est une vue en perspective schématique et partielle d'un exemple d'un module 100 de batterie électrique. Le module 100 comprend une pluralité de cellules électrochimiques élémentaires 101, par exemple, mais non nécessairement, identiques ou similaires (aux dispersions de fabrication près). Dans cet exemple, les cellules 101 ont une forme cylindrique. Chaque cellule 101 a par exemple un diamètre compris entre 0,5 et 10 cm, et une longueur comprise entre 2 et 20 cm. Les modes de réalisation décrits ne se limitent toutefois pas à ces exemples particuliers de forme et de dimensions. Chaque cellule 101 comporte une borne de connexion positive (+) et une borne de connexion négative (-). Dans cet exemple, les bornes de connexion positive (+) et négative (-) sont disposées respectivement sur les deux faces planes opposées de la cellule.

Les cellules 101 sont par exemple des cellules lithium-ion. Les modes de réalisation décrits ne se limitent toutefois pas à ce cas particulier.

Les cellules sont réparties en N étages ETᵢ, avec N entier supérieur ou égal à 1 et i entier allant de 1 à N. Dans l'exemple représenté, le module 100 comporte N=6 étages ET₁, ET₂, ET₃, ET₄, ET₅ et ET₆. Les modes de réalisation décrits s'appliquent plus généralement quel que soit le nombre N d'étages, supérieur ou égal à 1.

Dans l'exemple représenté, chaque étage ETᵢ comprend 10 cellules élémentaires 101. Plus généralement, chaque étage ETᵢ peut comprendre un nombre quelconque de cellules élémentaires 101, supérieur ou égal à 1. Les différents étages ETᵢ ont par exemple tous le même nombre de cellules élémentaires 101. A titre de variante, différents étages ETᵢ d'un même module peuvent présenter des nombres de cellules élémentaires 101 différents.

Les cellules élémentaires 101 d'un même étage ETᵢ sont connectées en parallèle entre une borne principale positive et une borne principale négative de l'étage. Par souci de simplification, les bornes principales positive et négative des étages ETᵢ et les métallisations d'interconnexion des cellules d'un même étage ETᵢ n'ont pas été représentées.

Les étages ETi sont reliés en série entre une borne principale positive et une borne principale négative du module. Par souci de simplification, les bornes principales positive et négative et les métallisations d'interconnexion des étages du module 100 n'ont pas été représentées.

Le module 100 peut comporter un boîtier ou support, non représenté, adapté à maintenir l'ensemble des cellules élémentaires 101 a des emplacements prédéfinis. Dans l'exemple représenté, les cellules 101 sont regroupées par étage, c'est-à-dire que les cellules 101 d'un même étage sont adjacentes, ou, dit autrement, que deux cellules 101 d'un même étage ne sont pas séparées l'une de l'autre par une cellule d'un autre étage. Un léger espace peut séparer chaque cellule 101 de ses voisines, pour permettre la circulation d'un fluide entre les cellules.

Dans l'exemple représenté, les cellules 101 sont agencées verticalement. Les cellules d'un même étage ETᵢ ont leurs bornes positive (+) disposées du côté d'une même face, supérieure ou inférieure, de l'étage, et leurs bornes négatives (-) disposées du côté de la face opposée de l'étage.

Dans cet exemple, les étages ETᵢ adjacents sont disposés tête bêche, c'est-à-dire que les cellules élémentaires de deux étages ETᵢ et ETᵢ₊₁ adjacents ont des orientations opposées. Ceci permet de faciliter la connexion en série des étages.

Une batterie électrique peut comprendre un unique module tel que défini ci-dessus, ou une pluralité de modules reliés en série et/ou en parallèle entre une borne principale positive et une borne principale négative de la batterie.

Selon un aspect d'un mode de réalisation, on prévoit de réaliser une batterie électrique comportant une pluralité de cellules élémentaires de stockage d'énergie électrique, et au moins une cellule de brassage fluidique ayant la même forme générale et sensiblement les mêmes dimensions que les cellules élémentaires de stockage. Ceci permet une intégration simple de la cellule de brassage, au plus proche des cellules élémentaires de la batterie.

La figure 2 illustre schématiquement un exemple d'une cellule de brassage fluidique 151 d'une batterie électrique selon un mode de réalisation. La figure 2 comprend plus particulièrement deux vues en perspective (A) et (B) de la cellule 151. La vue (A) représente la cellule vue de l'extérieur. La vue (B) est une vue en perspective éclatée des composants situés à l'intérieur d'un boîtier de la cellule.

La cellule de brassage 151 comprend un boîtier externe creux 161, présentant une forme générale identique ou similaire à celle des cellules élémentaires 101 du module 100 de la figure 1, à savoir une forme cylindrique dans cet exemple. Les dimensions du boîtier 161 sont identiques ou sensiblement identiques aux dimensions des cellules élémentaires 101 du module 100 de la figure 1. Le boîtier 161 est par exemple en un matériau électriquement isolant, par exemple un matériau plastique, par exemple un matériau du groupe comprenant l'acrylonitrile butadiène styrène (ABS), le polycarbonate (PC) et le polyétheréthercétone (PEEK), ou un polyamide (PA).

La cellule de brassage 151 comprend en outre un dispositif de brassage fluidique 163 situé à l'intérieur du boîtier 161. Le dispositif de brassage 163 est par exemple un ventilateur, adapté à mettre en circulation l'air situé à l'intérieur du boîtier 161. A titre d'exemple, le dispositif de brassage 163 est un ventilateur axial placé sensiblement à mi-hauteur du boîtier cylindrique 161. Le ventilateur présente par exemple des pales (non visibles sur la figure) mobiles en rotation autour d'un axe parallèle à l'axe central longitudinal du boîtier 161. Le ventilateur est par exemple adapté à créer un flux d'air axial (de bas en haut ou de haut en bas) à l'intérieur du boîtier 161.

Le boîtier 161 comprend au moins une face ajourée, c'est-à-dire comportant une ou plusieurs ouvertures traversantes permettant l'entrée et la sortie du fluide entourant le boîtier, lorsque le dispositif de brassage 163 est activé. Dans cet exemple la face courbe du boîtier 161 présente une pluralité d'ouvertures régulièrement réparties sur une partie supérieure et sur une partie inférieure du cylindre. Ceci permet d'aspirer et de projeter du fluide dans toutes les directions radiales de la cellule. A titre de variante, les ouvertures formées dans le boîtier 161 de part et d'autre du dispositif de brassage 163 peuvent être agencées de façon à privilégier une ou plusieurs directions d'aspiration et/ou de projection du fluide. A titre de variante, des ouvertures peuvent être prévues du côté des faces planes du boîtier 161.

Des éléments, non représentés, de canalisation du fluide adaptés à canaliser et diffuser le fluide dans une ou plusieurs directions souhaitées peuvent éventuellement être prévus à l'intérieur du boîtier 161.

Le boîtier 161 est fermé, du côté de son extrémité supérieure, par un premier bouchon de fermeture 165, et, du côté de son extrémité inférieure, par un deuxième bouchon de fermeture 167. Dans cet exemple, chacun des bouchons de fermeture 165 et 167 présente une face extérieure sensiblement plane.

La cellule 151 comprend en outre une première borne de connexion électrique 169 accessible depuis l'extérieur de la cellule du côté de la face supérieure du bouchon 165, et une deuxième borne de connexion électrique 171 accessible depuis l'extérieur de la cellule du côté de la face inférieure du bouchon 167. Les bornes de connexion 169, respectivement 171, de la cellule de brassage 151 ont sensiblement la même forme et la même disposition que les bornes de connexion positive (+), respectivement négative (-), des cellules élémentaires 101 du module 100. Les bornes de connexion 169 et 171 sont destinées, en fonctionnement, à recevoir respectivement un potentiel d'alimentation haut et un potentiel d'alimentation bas du dispositif de brassage 163. La tension nominale d'alimentation du dispositif de brassage 163 est par exemple sensiblement égale à la tension nominale de pleine charge des cellules élémentaires 101 du module 100.

Les bornes de connexion 169 et 171 de la cellule de brassage peuvent être directement connectées respectivement à une première borne d'alimentation (par exemple une borne d'alimentation positive) et à une deuxième borne d'alimentation (par exemple une borne d'alimentation négative) du dispositif de brassage 163. A titre de variante, un ou plusieurs éléments de contrôle peuvent être prévus entre la borne de connexion 169 et la borne d'alimentation positive du dispositif de brassage 163 et/ou entre la borne de connexion 171 et la borne d'alimentation négative du dispositif de brassage 163. Par souci de simplification, les première et deuxième bornes d'alimentation du dispositif de brassage n'ont pas été représentées sur la figure 2.

Dans l'exemple de la figure 2, la borne de connexion 169 est directement connectée à la première borne d'alimentation du dispositif de brassage 163, et la borne de connexion 171 est reliée à la deuxième borne d'alimentation du dispositif de brassage 163 par l'intermédiaire d'un interrupteur thermique ou interrupteur thermostat 173. L'interrupteur thermique 173 est adapté à connecter électriquement la borne 171 a la deuxième borne d'alimentation du dispositif de brassage 163 lorsque la température dépasse un premier seuil TH1, et à isoler électriquement la borne 171 de la deuxième borne d'alimentation du dispositif de brassage 163 lorsque la température passe sous un deuxième seuil TH2, inférieur ou égal au seuil TH1. De préférence, le seuil TH2 est strictement inférieur au seuil TH1, de façon à bénéficier d'un effet d'hystérésis et éviter des commutations intempestives de l'interrupteur 173 lorsque la température est proche du seuil TH1. La cellule de brassage 151 est ainsi auto-commandée pour activer le dispositif de brassage 163 lorsque la température dépasse le seuil TH1, et désactiver le dispositif de brassage lorsque la température repasse sous le seuil TH2. Ceci permet d'éviter de décharger la batterie inutilement lorsque la température au voisinage de la cellule de brassage est suffisamment basse. Les seuils TH1 et TH2 de l'interrupteur thermique peuvent être choisis en fonction des contraintes thermiques de l'application considérée. A titre d'exemple, le seuil TH1 est compris entre 25 et 50°C, par exemple de l'ordre de 30°C, et le seuil TH2 est compris entre 15 et 25°C, par exemple de l'ordre de 20°C.

Un avantage d'une cellule de brassage 151 du type décrit en relation avec la figure 2 est qu'elle peut aisément être intégrée dans un module de cellules élémentaires d'une batterie électrique tel que décrit en relation avec la figure 1. En particulier, sa géométrie lui permet de s'intégrer aisément parmi les cellules électrochimiques du module, par exemple en se substituant à l'une des cellules électrochimiques du module. En outre, du fait de leur agencement similaire à celui des bornes de connexion électrique des cellules électrochimiques, les bornes de connexion électrique 169 et 171 de la cellule de brassage 151 peuvent aisément être connectées directement respectivement à la borne positive (+) et à la borne négative (-) d'une cellule électrochimique, par exemple avec les mêmes connecteurs que ceux utilisés pour connecter les cellules électrochimiques les unes aux autres.

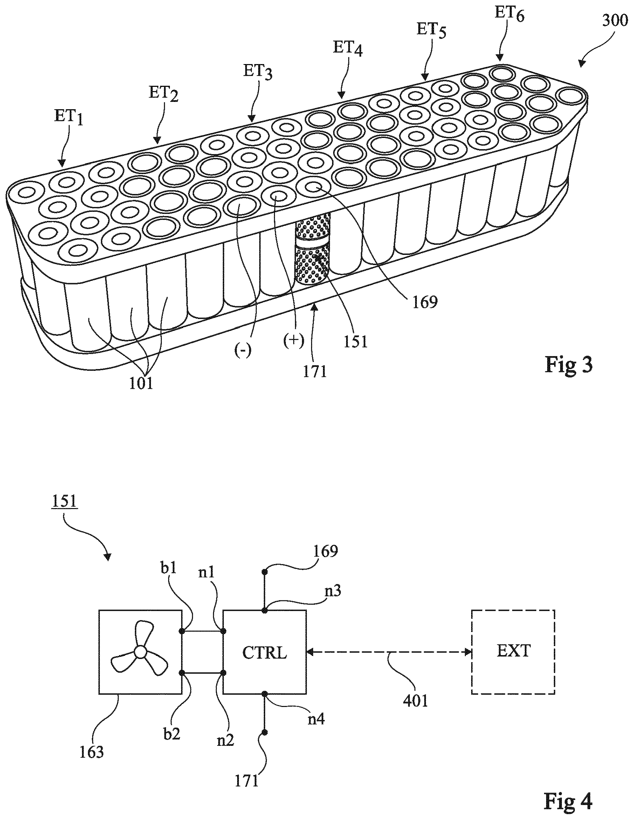

La figure 3 est une vue en perspective schématique et partielle d'un exemple d'un module de batterie 300 intégrant une cellule de brassage fluidique 151 du type décrit en relation avec la figure 2. Le module 300 de la figure 3 diffère du module 100 de la figure 1 principalement en ce que, dans le module 300, l'une des cellules électrochimiques 101 du module 100 de la figure 1 a été remplacée par une cellule de brassage 151 du type décrit en relation 2. Dans l'exemple représenté, la cellule 101 substituée est une cellule de l'étage ET₃ du module. Dans cet exemple, la cellule de brassage 151 est disposée à l'emplacement de la cellule 101 substituée, de façon que les bornes 169 et 171 de la cellule de brassage prennent respectivement la place des bornes positive (+) et négative (-) de la cellule 101 substituée. Les bornes 169 et 171 de la cellule de brassage 151 sont connectées respectivement à la borne principale positive (non visible sur la figure) et à la borne principale négative (non visible sur la figure) de l'étage ET₃. Ainsi, la cellule de brassage 151 tire son alimentation de l'ensemble des cellules électrochimiques 101 de l'étage ET₃.

En pratique, une batterie électrique selon un mode de réalisation peut comprendre une ou plusieurs cellules de brassage du type décrit en relation avec la figure 2, réparties parmi les cellules électrochimiques élémentaires de la batterie. Chaque cellule de brassage assure une circulation de fluide (dans cet exemple de l'air) au voisinage de son emplacement, participant à la gestion thermique de la batterie, et plus particulièrement à l'homogénéisation de sa température interne. De préférence, la cellule de brassage est auto-commandée, de sorte qu'aucune communication avec un dispositif extérieur n'est requise pour commander l'activation ou la désactivation du dispositif de brassage de la cellule.

L'intégration d'une telle cellule de brassage peut être prévue au stade de la conception de la batterie, par la prévision d'un ou plusieurs emplacements supplémentaires par rapport au besoin énergétique de la batterie, destinés à recevoir les cellules de brassage. La localisation optimale des cellules de brassage dans le module peut être déterminée lors de phases de test de la batterie dans son environnement de fonctionnement, sans nécessiter un redimensionnement des structures de maintien des cellules.

Un même module de batterie peut par exemple comporter plusieurs cellules de brassage d'orientations opposées de façon à créer un chemin de circulation alterné de haut en bas puis de bas en haut du fluide brassé.

La figure 4 est un schéma électrique simplifié illustrant, sous forme de blocs fonctionnels, un exemple d'une cellule de brassage fluidique du type décrit en relation avec la figure 2.

Sur la figure 4, on a représenté le dispositif de brassage 163, ainsi que ses deux bornes d'alimentation électrique référencées respectivement b1 et b2 sur la figure. On a en outre représenté les bornes de connexion 169 et 171 de la cellule de brassage.

On a de plus représenté sur la figure 4 un circuit de contrôle CTRL ayant une borne n1 connectée à la borne b1, une borne n2 connectée à la borne b2, une borne n3 connectée à la borne 169, et une borne n4 connectée à la borne 171.

Dans sa forme la plus simple, le circuit de contrôle CTRL peut être constitué uniquement de deux conducteurs électriques (non détaillés sur la figure) connectant respectivement la borne n1 à la borne n3 et la borne n2 à la borne n4. Dans ce cas, la cellule de brassage 151 est non commandée, et alimentée en permanence par la ou les cellules de l'étage aux bornes duquel elle est connectée.

Dans l'exemple de la figure 2, le circuit de contrôle CTRL est constitué d'un conducteur électrique connectant la borne n1 à la borne 169, et de l'interrupteur thermique 173 (non détaillé sur la figure 4) dont une première borne de conduction est reliée, par exemple connectée, à la borne n2 et dont une deuxième borne de conduction est reliée, par exemple connectée, à la borne n4.

Le circuit de contrôle peut comporter divers autres composants (non détaillés sur la figure) en plus ou en substitution des composants susmentionnés.

A titre d'exemple, le circuit de contrôle CTRL peut comporter un fusible adapté à interrompre la décharge de l'étage en cas de défaillance conduisant à une mise en court-circuit des bornes d'alimentation b1 et b2 du dispositif de brassage 163. Ceci permet d'éviter une mise en court-circuit de l'étage en cas de défaillance du dispositif de brassage 163.

Le circuit de contrôle CTRL peut par ailleurs comporter un circuit adapté à détecter un passage de la tension entre les bornes 169 et 171 en dessous d'un seuil prédéfini, et à commander en conséquence l'interruption de l'alimentation du dispositif de brassage 163. Ce circuit peut par exemple comporter un interrupteur commandé, par exemple un transistor MOS, placé entre les bornes n1 et n2 ou entre les bornes n2 et n4 du circuit de contrôle, et un comparateur de tension agencé pour comparer la tension entre les bornes 169 et 171 à un seuil de référence et commander en conséquence l'ouverture ou la fermeture de l'interrupteur. Ceci permet d'éviter une décharge profonde de l'étage aux bornes duquel est connecté la cellule de brassage, dans l'éventualité où la batterie resterait inutilisée pendant une longue période. A titre d'exemple, le seuil de coupure en tension peut être un seuil intermédiaire entre la tension nominale de pleine charge de l'étage et une tension de décharge profonde de l'étage.

Dans une autre variante, le circuit de contrôle peut comporter un élément chauffant, par exemple une résistance chauffante, activable pour chauffer le fluide brassé en cas d'utilisation de la batterie à basse température, par exemple lors d'une phase de démarrage à froid de la batterie. Dans ce cas, un capteur de température ou un interrupteur thermique peut être prévu pour n'activer l'élément chauffant qu'en dessous d'un seuil prédéterminé de température.

Dans les exemples décrits ci-dessus, le dispositif de brassage 163 comporte un moteur directement alimenté par la tension de l'étage ETᵢ aux bornes duquel est connectée la cellule de brassage. A titre de variante, le circuit de contrôle CTRL peut comporter des circuits permettant de moduler la puissance du moteur voire d'inverser le sens brassage en fonction de divers paramètres, par exemple en fonction de mesures de température réalisées par un ou plusieurs capteurs de température du circuit de contrôle.

Dans une autre variante, le dispositif de contrôle CTRL peut comporter un circuit adapté à détecter une mise en fonctionnement du dispositif (aussi appelé charge) alimenté par la batterie, et à activer le dispositif de brassage uniquement lorsque le dispositif alimenté par la batterie est en fonctionnement. La détection d'une mise en fonctionnement du dispositif alimenté par la batterie peut par exemple être réalisé par détection d'une variation de la tension et/ou du courant entre les bornes 169 et 171 de la cellule de brassage (et donc entre les bornes de l'étage ETᵢ aux bornes duquel est connecté le dispositif de brassage). Dans le cas d'un véhicule à alimentation électrique, la détection d'une mise en fonctionnement du dispositif peut alternativement être réalisée par l'intermédiaire d'un détecteur de mouvement intégré au circuit de contrôle CTRL de la cellule de brassage.

Les diverses variantes du circuit de contrôle CTRL mentionnées ci-dessus peuvent bien entendu être combinées.

On a considéré ci-dessus uniquement des exemples de réalisation dans lesquels la cellule de brassage 151 est non commandée (c'est-à-dire activée en permanence), ou auto-commandée (c'est-à-dire commandée de façon autonome sans liaison de communication avec un dispositif extérieur à la cellule). Ceci permet une intégration aisée des cellules de brassage dans tout type de batterie.

A titre de variante, comme illustré en traits interrompus sur la figure 4, la cellule de brassage 151 peut être adaptée à communiquer avec un dispositif extérieur EXT, par exemple une autre cellule de brassage ou un dispositif centralisé de gestion de la batterie. La liaison 401 entre la cellule 151 et le dispositif EXT peut être une liaison radio sans fil, par exemple de type WiFi, BlueTooth, etc. A titre de variante, la liaison 401 peut être une liaison par courant porteur via le chemin de puissance de la batterie. Dans une autre variante, la liaison 401 peut être une liaison filaire spécifique. La liaison 401 peut être unidirectionnelle ou bidirectionnelle. A titre d'exemple, la liaison 401 est utilisée par le dispositif EXT pour commander à distance l'activation ou l'interruption du dispositif de brassage 163. La liaison 401 peut par ailleurs être utilisée par la cellule de brassage 151 pour communiquer au dispositif EXT des mesures, par exemple de tension et/ou de température, effectuées par un ou plusieurs capteurs du circuit de contrôle CTRL de la cellule.

On notera que dans le cas où la cellule de brassage est adaptée à communiquer avec un dispositif centralisé de gestion de la batterie, les dispositifs de brassage des cellules de brassage peuvent avantageusement être utilisés comme éléments d'équilibrage, pour dissiper l'énergie excédentaire des étages aux bornes desquels ils sont reliés lors de phases d'équilibrage du module.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, bien que l'on ait décrit ci-dessus uniquement des exemples de réalisation de cellules cylindriques, la personne du métier saura adapter les modes de réalisation à d'autres formes de cellules, par exemple des cellules prismatiques.

En outre, bien que l'on ait détaillé ci-dessus uniquement des exemples de réalisation dans lesquels le fluide entourant les cellules électrochimiques est de l'air, les modes de réalisation décrits ne se limitent pas à ce cas particulier. A titre de variante, le fluide environnant les cellules peut être un autre gaz, ou encore un liquide en contact direct avec les cellules, par exemple une huile diélectrique. Dans le cas d'un liquide, le dispositif de brassage 163 peut comprendre une hélice ou une pompe de brassage, ou tout autre dispositif adapté à brasser un liquide.

On notera par ailleurs que les cellules de brassage décrites ci-dessus peuvent être utilisées en complément d'un dispositif de refroidissement extérieur de la batterie, non détaillé ici.

Enfin, la mise en oeuvre pratique des modes de réalisation et variantes décrits est à la portée de la personne du métier à partir des indications fonctionnelles données ci-dessus. En particulier, la réalisation du circuit de contrôle CTRL des cellules de brassage est à la portée de la personne du métier à partir des indications fonctionnelles fournies notamment en relation avec la figure 4.

## Revendications

1. Module (300) de batterie électrique comportant une pluralité de cellules élémentaires de stockage (101), et au moins une cellule de brassage fluidique (151) ayant la même forme générale et sensiblement les mêmes dimensions que les cellules élémentaires de stockage (101).

2. Module (300) selon la revendication 1, dans lequel ladite au moins une cellule de brassage (151) présente des première (169) et deuxième (171) bornes de connexion électrique ayant sensiblement la même forme et les mêmes dimensions que, respectivement, des première (+) et deuxième (-) bornes de connexion électrique des cellules élémentaires de stockage (101).

3. Module (300) selon la revendication 2, dans lequel chaque cellule de brassage (151) a ses première (169) et deuxième (171) bornes de connexion électrique connectées respectivement aux première (+) et deuxième (-) bornes de connexion électrique d'une cellule élémentaire de stockage (101) .

4. Module (300) selon la revendication 3, dans lequel les cellules élémentaires de stockage (101) sont réparties en plusieurs étages (ETᵢ) de plusieurs cellules élémentaires de stockage (101) chacun, les cellules élémentaires de stockage (101) d'un même étage (ETᵢ) étant connectées en parallèle et les étages (ETᵢ) étant connectés en série.

5. Module (300) selon l'une quelconque des revendications 2 à 4, dans lequel chaque cellule de brassage (151) comprend un boîtier (161) ayant la même forme générale et sensiblement les mêmes dimensions que les cellules élémentaires de stockage (101), et, à l'intérieur du boîtier (161), un dispositif de brassage fluidique (163) relié électriquement aux première (169) et deuxième (171) bornes de connexion électrique de la cellule de brassage.

6. Module (300) selon la revendication 5, dans lequel le boîtier (161) présente des ouvertures traversantes de part et d'autre du dispositif de brassage (163).

7. Module (300) selon la revendication 5 ou 6, dans lequel le dispositif de brassage fluidique (163) est relié électriquement aux première (169) et deuxième (171) bornes de connexion électrique de la cellule de brassage par l'intermédiaire d'un circuit de contrôle (CTRL).

8. Module (300) selon la revendication 7, dans lequel le circuit de contrôle (CTRL) comprend un interrupteur thermique (173) adapté à activer le dispositif de brassage (163) lorsque la température dépasse un premier seuil de température prédéfini, et à désactiver le dispositif de brassage (163) lorsque la température repasse sous un deuxième seuil de température prédéfini, inférieur ou égal au premier seuil de température.

9. Module (300) selon la revendication 7 ou 8, dans lequel le circuit de contrôle (CTRL) est configuré pour désactiver le dispositif de brassage (163) lorsque la tension entre les première (169) et deuxième (171) bornes de connexion électrique de la cellule de brassage passe sous un seuil de tension prédéfini.

10. Module (300) selon l'une quelconque des revendications 7 à 9, dans lequel le circuit de contrôle (CTRL) est adapté à détecter une mise en fonctionnement d'un dispositif extérieur alimenté par le module, et à activer le dispositif de brassage (163) uniquement lorsque le dispositif extérieur est en fonctionnement.

11. Module (300) selon l'une quelconque des revendications 5 à 10, dans lequel le dispositif de brassage est un dispositif de brassage d'un gaz.

12. Module (300) selon l'une quelconque des revendications 5 à 10, dans lequel le dispositif de brassage est un dispositif de brassage d'un liquide.

13. Module (300) selon l'une quelconque des revendications 1 à 12, dans lequel la cellule de brassage (151) est auto-commandée, c'est-à-dire qu'aucune liaison de communication n'est prévue entre la cellule de brassage (151) et un dispositif extérieur.

14. Module (300) selon l'une quelconque des revendications 1 à 13, dans lequel les cellules élémentaires de stockage (101) et ladite au moins une cellule de brassage (151) sont cylindriques.

## Patentansprüche

1. Elektrisches Batteriemodul (300) mit einer Vielzahl von Speicherelementarzellen (101) und mindestens einer Fluid-Rührzelle (151), die die gleiche allgemeine Form und im Wesentlichen die gleichen Abmessungen wie die Speicherelementarzellen (101) aufweist.

2. Modul (300) nach Anspruch 1, wobei die mindestens eine Rührzelle (151) erste (169) und zweite (171) elektrische Verbindungsanschlüsse aufweist, die im Wesentlichen die gleiche Form und die gleichen Abmessungen wie die ersten (+) bzw. zweiten (-) elektrischen Verbindungsanschlüsse der Speicherelementarzellen (101) haben.

3. Modul (300) nach Anspruch 2, wobei die ersten (169) und zweiten (171) elektrischen Verbindungsanschlüsse jeder Rührzelle (151) mit den ersten (+) bzw. zweiten (-) elektrischen Verbindungsanschlüssen einer Speicherelementarzelle (101) verbunden sind.

4. Modul (300) nach Anspruch 3, wobei die Speicherelementarzellen (101) in mehrere Stufen (ETi) von jeweils mehreren Speicherelementarzellen (101) unterteilt sind, wobei die Speicherelementarzellen (101) einer gleichen Stufe (ETi) parallel geschaltet sind und die Stufen (ETi) in Reihe geschaltet sind.

5. Modul (300) nach einem der Ansprüche 2 bis 4, **dadurch gekennzeichnet, dass** jede Rührzelle (151) ein Gehäuse (161) aufweist, das die gleiche allgemeine Form und im Wesentlichen die gleichen Abmessungen wie die Speicherelementarzellen (101) aufweist, und im Inneren des Gehäuses (161) eine Fluid-Rührvorrichtung (163), die elektrisch mit den ersten (169) und zweiten (171) elektrischen Anschlussklemmen der Rührzelle gekoppelt ist.

6. Modul (300) nach Anspruch 5, wobei das Gehäuse (161) auf beiden Seiten der Rührvorrichtung (163) Durchgangsöffnungen aufweist.

7. Modul (300) nach Anspruch 5 oder 6, wobei die Fluid-Rührvorrichtung (163) über eine Steuerschaltung (CTRL) elektrisch mit dem ersten (169) und zweiten (171) elektrischen Anschluss der Rührzelle verbunden ist.

8. Modul (300) nach Anspruch 7, wobei die Steuerschaltung (CTRL) einen thermischen Schalter (173) aufweist, der so ausgelegt ist, dass er die Rührvorrichtung (163) aktiviert, wenn die Temperatur einen ersten vordefinierten Temperaturschwellenwert überschreitet, und die Rührvorrichtung (163) deaktiviert, wenn die Temperatur unter einen zweiten vordefinierten Temperaturschwellenwert zurücckehrt, der kleiner oder gleich dem ersten Temperaturschwellenwert ist.

9. Modul (300) nach Anspruch 7 oder 8, wobei die Steuerschaltung (CTRL) so konfiguriert ist, dass sie die Rührvorrichtung (163) deaktiviert, wenn die Spannung zwischen den ersten (169) und zweiten (171) elektrischen Anschlussklemmen der Rührzelle unter einen vordefinierten Spannungsschwellenwert fällt.

10. Modul (300) nach einem der Ansprüche 7 bis 9, wobei die Steuerschaltung (CTRL) so ausgelegt ist, dass sie den Betrieb einer externen Vorrichtung, die von dem Modul mit Strom versorgt wird, erkennt und die Rührvorrichtung (163) nur dann aktiviert, wenn die externe Vorrichtung in Betrieb ist.

11. Modul (300) nach einem der Ansprüche 5 bis 10, wobei die Rührvorrichtung eine Gas-Rührvorrichtung ist.

12. Modul (300) nach einem der Ansprüche 5 bis 10, wobei die Rührvorrichtung eine Flüssigkeit-Rührvorrichtung ist.

13. Modul (300) nach einem der Ansprüche 1 bis 12, wobei die Rührzelle (151) selbstgesteuert ist, d. h., dass keine Kommunikationsverbindung zwischen der Rührzelle (151) und einem externen Gerät vorgesehen ist.

14. Modul (300) nach einem der Ansprüche 1 bis 13, wobei die Speicherelementarzellen (101) und die mindestens eine Rührzelle (151) zylindrisch sind.

## Claims

1. Electric battery module (300) including a plurality of storage elementary cells (101), and at least one fluidic stirring cell (151) having the same general shape and substantially the same dimensions as the storage elementary cells (101) .

2. Module (300) according to claim 1, wherein said at least one stirring cell (151) has first (169) and second (171) electrical connection terminals having substantially the same shape and the same dimensions as first (+) and second (-) electrical connection terminals of the storage elementary cells (101), respectively.

3. Module (300) according to claim 2, wherein each stirring cell (151) has its first (169) and second (171) electrical connection terminals connected to the first (+) and second (-) electrical connection terminals of a storage elementary cell (101), respectively.

4. Module (300) according to claim 3, wherein the storage elementary cells (101) are divided into several stages (ETᵢ) of several storage elementary cells (101) each, the storage elementary cells (101) of a same stage (ETᵢ) being connected in parallel and the stages (ETᵢ) being connected in series.

5. Module (300) according to any one of claims 2 to 4, wherein each stirring cell (151) comprises a housing (161) having the same general shape and substantially the same dimensions as the storage elementary cells (101), and, inside the housing (161), a fluidic stirring device (163) electrically coupled to the first (169) and second (171) electrical connection terminals of the stirring cell.

6. Module (300) according to claim 5, wherein the housing (161) has through openings on either side of the stirring device (163).

7. Module (300) according to claim 5 or 6, wherein the fluidic stirring device (163) is electrically connected to the first (169) and second (171) electrical connection terminals of the stirring cell via a control circuit (CTRL).

8. Module (300) according to claim 7, wherein the control circuit (CTRL) comprises a thermal switch (173) adapted to activate the stirring device (163) when the temperature exceeds a first predefined temperature threshold, and to deactivate the stirring device (163) when the temperature returns below a second predefined temperature threshold, less than or equal to the first temperature threshold.

9. Module (300) according to claim 7 or 8, wherein the control circuit (CTRL) is configured to deactivate the stirring device (163) when the voltage between the first (169) and second (171) electrical connection terminals of the stirring cell goes below a predefined voltage threshold.

10. Module (300) according to any one of claims 7 to 9, wherein the control circuit (CTRL) is adapted to detect an operation of an external device powered by the module, and to activate the stirring device (163) only when the external device is in operation.

11. Module (300) according to any one of claims 5 to 10, wherein the stirring device is a gas stirring device.

12. Module (300) according to any one of claims 5 to 10, wherein the stirring device is a liquid stirring device.

13. Module (300) according to any one of claims 1 to 12, wherein the stirring cell (151) is self-controlled, that is to say that no communication link is provided between the stirring cell (151) and an external device.

14. Module (300) according to any one of claims 1 to 13, wherein the storage elementary cells (101) and said at least one stirring cell (151) are cylindrical.
